Europäisches Patentamt

(19) European Patent Office

Office européen des brevets

(11) Numéro de publication: **0 291 464**
**A1**

## DEMANDE DE BREVET EUROPEEN

(21) Numéro de dépôt: 88810311.6

(22) Date de dépôt: 11.05.88

(51) Int. Cl.⁴: **B 65 G 47/68**

(30) Priorité: 12.05.87 FR 8706758

(43) Date de publication de la demande:
17.11.88 Bulletin 88/46

(84) Etats contractants désignés:
CH DE FR GB IT LI

(71) Demandeur: **SAPAL, Société Anonyme des Plieuses Automatiques**
**44, Av. du Tir Fédéral**
**CH-1024 Ecublens (CH)**

(72) Inventeur: **Chenevard, Alexis**
**Résidence de la Côte 20**
**CH-1110 Morges (CH)**

(74) Mandataire: **Nithardt, Roland**
**CABINET ROLAND NITHARDT Rue Edouard Verdan 15**
**CH-1400 Yverdon-les-Bains (CH)**

(54) **Procédé et dispositif pour aligner et/ou mettre au pas des produits.**

(57) Le dispositif selon l'invention comporte un convoyeur d'alimentation (10) pour amener par rangées successives de manière continue des produits (12) qui sont ensuite déposés sur un convoyeur d'évacuation (11) faisant un angle aigu (α) avec le convoyeur d'alimentation. Des moyens (15, 16) pour régler la vitesse V du convoyeur d'évacuation en fonction de la vitesse $V_0$ du convoyeur d'alimentation permettent d'obtenir que le dépôt des produits d'une rangée sur le convoyeur d'évacuation s'effectue lorsque les derniers produits de la rangée précédente arrivent à la hauteur des premiers produits de la rangée suivante. Des moyens (14) permettent l'alignement de ces produits.

FIG. I

EP 0 291 464 A1

**Description**

## PROCEDE ET DISPOSITIF POUR ALIGNER ET/OU METTRE AU PAS DES PRODUITS

La présente invention concerne un procédé pour aligner et/ou mettre au pas de manière continue des produits amenés en rangées successives par au moins un convoyeur d'alimentation, et déposés sur un convoyeur d'évacuation, ce dernier étant équipé de moyens indépendants pour régler sa vitesse axiale par rapport à celle du convoyeur d'alimentation.

Elle concerne également un dispositif pour la mise en oeuvre de ce procédé.

Le transfert de produits d'un premier convoyeur sans fin sur un deuxième convoyeur sans fin disposé transversalement par rapport au premier, pose un problème lorsque les cadences d'amenée et d'évacuation de ces produits sont élevées. En effet, lorsque par exemple une rangée de produits tels que des tablettes de chocolat ou des produits similaires relativement fragiles et demandant de ce fait à être manipulés avec une certaine précaution, arrive en bout du convoyeur d'alimentation et est déposée, le plus souvent au moyen d'un chariot mobile, sur le convoyeur d'évacuation transversal d'évacuation, le temps nécessaire pour évacuer cette rangée et pour ramener le chariot mobile dans sa position initiale est du temps perdu, non utilisable pour effectuer le transfert de la rangée suivante.

Ce phénomène entraîne des limitations de cadence, qui deviennent incompatibles avec les exigences actuelles en matière de conditionnement.

Par ailleurs, le conditionnement de ces produits par des unités d'emballage nécessite en général l'alignement et la mise en pas des produits. Si l'alignement peut être effectué par des chicanes, la mise en pas nécessite souvent des installations complexes telles que des chaînes à taquets, des tronçons de transporteurs à bandes multiples susceptibles d'être entraînés indépendamment les uns des autres à des vitesses différentes, des détecteurs de présence ou de position des produits et une électronique d'asservissement coûteuse.

Il en résulte des équipements sophistiqués et chers, parfois difficiles à maîtriser, de sorte que le coût du conditionnement représente une part non négligeable du coût du produit, ce qui constitue bien entendu un inconvénient, voire une limitation de la diffusion des produits concernés.

La présente invention se propose de pallier les inconvénients ci-dessus en réalisant un procédé et un dispositif permettant de transférer automatiquement et d'aligner, voire de mettre en pas, des produits amenés par au moins un convoyeur d'alimentation et repris par un convoyeur d'évacuation, disposé sensiblement transversalement par rapport au précédent.

Dans ce but, le procédé selon l'invention est caractérisé en ce que l'on dispose lesdits convoyeurs d'alimentation et d'évacuation de telle manière que leurs axes forment un angle aigu entre eux, en ce que l'on règle la vitesse $V$ du convoyeur d'évacuation en fonction de la vitesse $V_0$ du convoyeur d'alimentation, de telle manière que le dépôt des produits d'une rangée sur le convoyeur d'évacuation s'effectue lorsque les derniers produits de la rangée précédente arrivent approximativement à la hauteur des premiers produits de la rangée suivante et en ce que l'on aligne les produits sur ledit convoyeur d'évacuation en faisant pivoter les rangées successives de produits d'un angle complémentaire à l'angle des axes des deux convoyeurs.

Selon un mode de réalisation avantageux du procédé dans lequel on amène les produits par rangées successives sur $n$ convoyeurs d'alimentation, disposés parallèlement entre eux et se déplaçant à la même vitesse $V_0$ et dans lequel on dépose successivement les rangées de produits des $n$ convoyeurs d'alimentation sur le convoyeur d'évacuation, la vitesse $V$ du convoyeur d'évacuation est liée à la vitesse $V_0$ des $n$ convoyeurs d'alimentation par la relation :

$$V = \frac{\sum_{1}^{n} \ell_i + \sum_{1}^{n} e_i}{b} \cdot V_0$$

où

$V_0$ représente la vitesse de déplacement axial des convoyeurs d'alimentation

$b$ représente la distance séparant une rangée de produits de la suivante sur les convoyeurs d'alimentation,

$\ell_i$ représente la longueur des rangées d'un même convoyeur d'alimentation i

$e_i$ représente l'écart entre une rangée de produits et la suivante sur le convoyeur d'évacuation après alignement des produits.

Selon un autre mode de réalisation du procédé dans lequel toutes les rangées de produits ont la longueur $\ell$, l'on effectue la mise en pas des produits sur le convoyeur d'évacuation, et l'on règle de vitesse $V$ de ce convoyeur par rapport à la vitesse $V_0$ du convoyeur d'amenée de telle manière que ces vitesses soient liées par la relation suivante :

$$V = \frac{n\,(\ell + a)}{b} \cdot V_o$$

dans laquelle a représente la distance des produits entre eux dans une même rangée.

Le dispositif pour aligner et/ou mettre en pas de manière continue des produits amenés en rangées successives par au moins un convoyeur d'alimentation, et déposés sur un convoyeur d'évacuation, ce dernier étant équipé de moyens indépendants pour régler sa vitesse axiale par rapport à celle des convoyeurs d'alimentation, dans lequel le convoyeur d'alimentation forme avec le convoyeur d'évacuation un angle aigu ($\alpha$), est caractérisé en ce qu'il comprend des moyens pour régler la vitesse V du convoyeur d'évacuation en fonction de la vitesse $V_0$ du convoyeur d'alimentation, de telle manière que le dépôt des produits d'une rangée sur le convoyeur d'évacuation s'effectue lorsque les derniers produits de la rangée précédente arrivent approximativement à la hauteur des premiers produits de la rangée suivante, et des moyens pour aligner les produits sur ledit convoyeur d'évacuation en faisant pivoter les rangées successives de produits d'un angle complémentaire à l'angle des axes des convoyeurs.

Selon un mode de réalisation particulièrement avantageux du dispositif, l'angle ($\alpha$) des deux convoyeurs est de préférence défini par la relation :

**L** $\geqq \ell \cos \alpha + $ **c** $\sin \alpha$

où

**L** représente la largeur du convoyeur d'évacuation,

$\ell$ représente la longueur d'une rangée de produits sur le convoyeur d'alimentation,

**c** représente la longueur d'un produit.

D'une façon avantageuse, le dispositif peut comporter $\underline{n}$ convoyeurs d'alimentation disposés parallèlement entre eux et un convoyeur d'évacuation faisant avec les convoyeurs d'alimentation un angle $\alpha$.

La présente invention sera mieux comprise en référence à la description d'exemples de réalisation et du dessin annexé dans lequel :

la figure 1 représente une vue schématique du dispositif selon l'invention, illustrant le passage des produits du convoyeur d'alimentation sur le convoyeur d'évacuation,

la figure 2 représente un schéma pour démontrer la relation liant la largeur du convoyeur d'évacuation à la largeur du convoyeur d'alimentation et à la longueur des produits transportés, et

la figure 3 représente une vue schématique d'une réalisation simplifiée du dispositif selon l'invention.

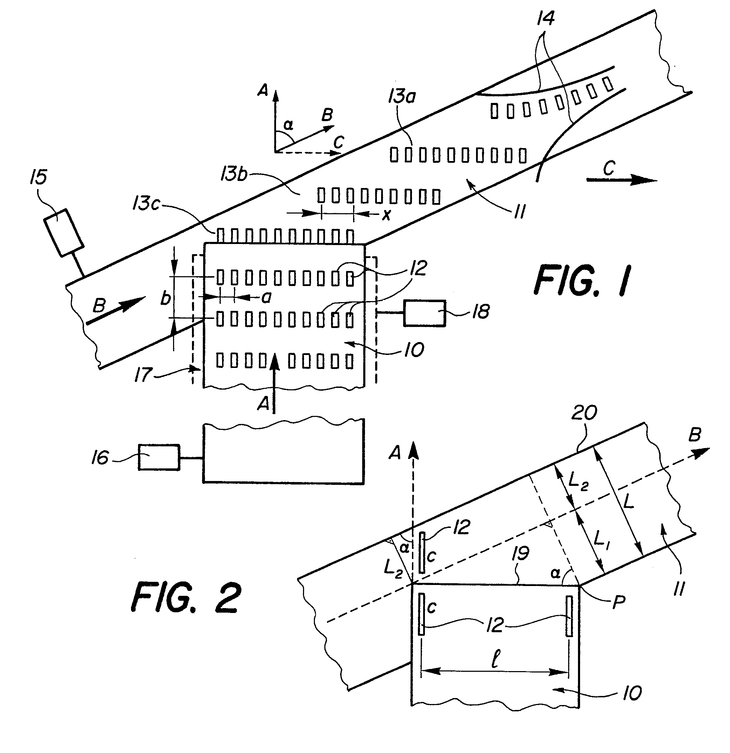

En référence à la figure 1, le dispositif décrit comporte essentiellement un convoyeur d'alimentation 10 se déplaçant dans le sens de la flèche A et un convoyeur d'évacuation 11 se déplaçant dans le sens de la flèche B. Les deux directions de déplacement A et B forment entre elles un angle $\alpha$.

Le convoyeur d'alimentation 10 amène des rangées successives de produits 12 qui sont destinés à être déposés sur le convoyeur d'évacuation 11. On constate que dans son mode d'utilisation illustré par la figure 1, les rangées déposées sur le convoyeur d'évacuation 11 sont initialement à la fois décalées dans le sens de l'axe A et dans une direction illustrée par la flèche C, perpendiculaire à l'axe A. Deux rangées successives 13a et 13b ou 13b et 13c, après leur transfert sur le convoyeur 11, présentent des produits qui se "chevauchent" sur une distance **x**. La longueur **x**, ou le nombre des produits qui se "chevauchent" sur deux rangées successives, peut être réglée en fonction des vitesses respectives des deux convoyeurs.

Des chicanes 14, ou d'autres organes appropriés tels que des bandes sans fin de guidage, sont disposées le long de la trajectoire des rangées de produits, sur le convoyeur 11, pour aligner les produits de telle manière qu'ils puissent ensuite être traités par une unité de conditionnement. Pour assurer en plus la mise en pas de ces produits, après leur alignement, il convient de régler la vitesse **V** du convoyeur d'amenée 10, de telle manière que l'écart final de tous les produits après leur alignement soit le même, c'est-à-dire soit égal à la distance $\underline{a}$ qui sépare deux produits sur le convoyeur d'amenée. A cet effet, le convoyeur 11 est équipé d'un moteur d'entraînement 15, représenté schématiquement, qui entraîne ce convoyeur à la vitesse **V**, et le convoyeur d'amenée 10 est équipé d'un moteur d'entraînement 16 qui entraîne ledit convoyeur à la vitesse $V_0$. Dans la pratique, on déterminera la vitesse **V** en fonction de la vitesse $V_0$ comme cela sera expliqué ci-dessous.

Selon un premier mode de réalisation, les convoyeurs 10 et 11 sont montés de façon fixe l'un par rapport à l'autre, ce qui revient à dire que l'angle $\alpha$ que forment les axes A et B est contant. Une telle solution est avantageuse dans le cas où les produits traités sont toujours les mêmes et où l'on connaît parfaitement leur comportement lors de leur passage d'un convoyeur sur l'autre.

Selon un deuxième mode de réalisation, l'un des deux convoyeurs ou les deux sont montés sur des supports mobiles tels que le support 17 portant l'extrémité libre du convoyeur 10, et sont associés à un organe de réglage ou de commande 18 qui permet par exemple de faire pivoter ce convoyeur 10 par rapport au convoyeur 11 et de modifier l'angle $\alpha$ des deux axes A et B. Une telle modification de l'angle $\alpha$ peut se faire en cours d'utilisation du dispositif ou avant sont utilisation en fonction de la nature, de la forme, du comportement des produits au cours de leur transport, ou du résultat souhaité en aval.

La commande de la modification de l'angle $\alpha$ peut être manuelle, mécanisée, voire programmée.

La figure 2 illustre le principe de calcul de la largeur **L** du convoyeur d'évacuation 11 par rapport à la longueur

$\ell$ d'une rangée de produits sur le convoyeur d'alimentation 10 et à la longueur **c** des produits transportés. Pour déterminer cette largeur, on admet que le convoyeur 11 est disposé sensiblement à la verticale du point P qui constitue l'angle avant droit (sur la figure 2) de l'extrémité libre de déchargement 19 du convoyeur d'alimentation 10, et que le produit 12 de longueur **c**, se trouvant initialement à l'extrémité gauche (sur la figure 2) de ce convoyeur, doit pouvoir être placé entièrement sur le convoyeur 11 sans qu'il ne dépasse le bord extrême 20 de celui-ci. Dans ces conditions, la largeur **L** du convoyeur 11 est égale à la somme des largeurs **L₁** et **L₂**. La largeur **L₁** est égale à **c** cos α et la largeur **L₂** est au minimum égale à **c** sin α. Dans les conditions énoncées ci-dessus, la largeur **L** du convoyeur 11 a une valeur égale ou supérieure à : **c** cos α + **c** sin α.

Comme mentionné précédemment, les vitesses relatives des deux convoyeurs ont une importance primordiale sur la disposition des produits après leur transfert sur le convoyeur d'évacuation. Si l'on veut réduire la valeur de la distance de "chevauchement" x (voir figure 1), il suffit d'augmenter la vitesse de déplacement du convoyeur 11 par rapport à celle du convoyeur 10. Si en revanche on souhaite augmenter la distance de "chevauchement" x, il suffit de réduire la vitesse du convoyeur 11 par rapport à celle du convoyeur 10, ou ce qui revient au même, à augmenter la vitesse du convoyeur 10 par rapport à celle du convoyeur 11, de manière à obtenir un meilleur remplissage de ce convoyeur.

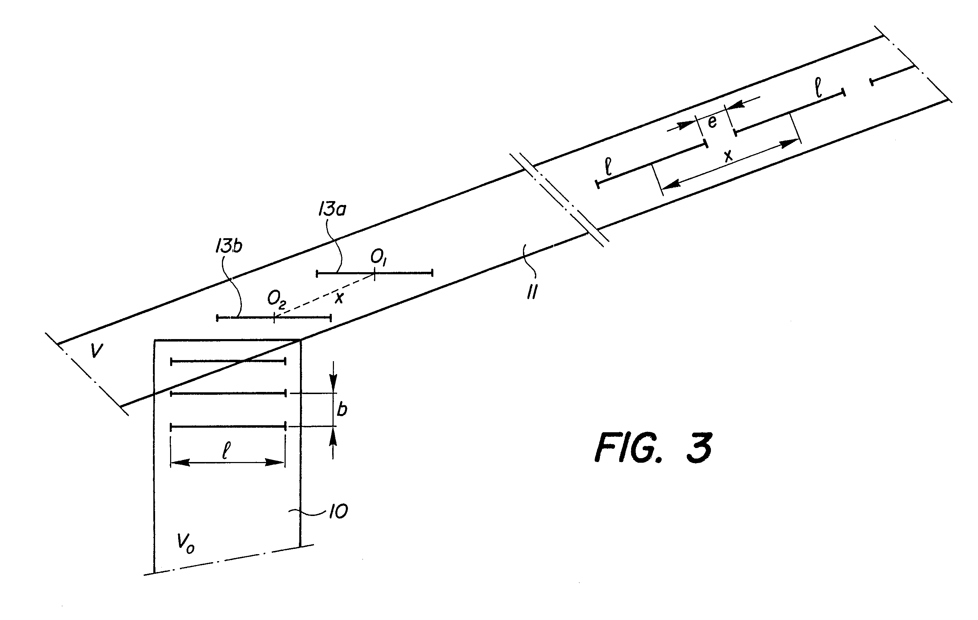

Dans le cas le plus simple, représenté par la figure 3, le dispositif comporte un seul convoyeur d'alimentation 10. Soit **V** la vitesse du convoyeur d'évacuation et **V₀** la vitesse du convoyeur d'alimentation. Soit **l** la longueur d'une rangée de produits, **b** la distance séparant deux rangées sur le convoyeur d'alimentation 10, et **e** la distance séparant le dernier produit d'une rangée du premier produit de la rangée suivante, après l'alignement des produits sur le convoyeur d'évacuation 11. La vitesse **V** du convoyeur d'évacuation est égale à la distance **x**, qui sépare par exemple les deux points milieux **O₁** et **O₂** de deux rangées successives 13a et 13b sur le convoyeur 11, divisée par le temps **t** que met la rangée 13b pour prendre la place de la rangée précédente 13a. Or le temps **t** est égale au quotient de la distance **b** définie ci-dessus par la vitesse **V₀**.

D'où

$$V = \frac{x}{b} \cdot V_o$$

Or $x = \ell + e$
d'où :

$$V = \frac{\ell + e}{b} \cdot V_o \qquad \text{avec } e > 0$$

Cette formule exprime la condition d'alignement lorsque le dispositif ne comporte qu'un seul convoyeur d'alimentation 10. La mise en pas s'obtient lorsque l'intervalle **e** est égale à **a** qui représente la distance qui sépare deux produits dans une même rangée sur le convoyeur d'alimentation. De ce fait, la condition d'alignement et de mise en pas devient :

$$V = \frac{\ell + a}{b} \cdot V_o$$

Lorsque le dispositif comporte plusieurs convoyeurs d'alimentation, 10a, 10b, ...,10i, ..., 10n, qui déposent successivement une rangée sur le convoyeur d'évacuation 11, la distance, qui sépare deux points correspondants de deux rangées successives déposées par un même convoyeur d'alimentation 10, est égale à :

$$\sum_1^n \ell_i + \sum_1^n e_i$$

où $\ell_i$ est la longueur d'une rangée de produits sur le convoyeur d'alimentation 10i

et $e_i$ est la distance entre le dernier produit de la rangée déposée par le convoyeur $10_i$ et le premier produit de la rangée déposée par le convoyeur $10_i + 1$

d'où :

$$V = \frac{\sum_1^n \ell_i + \sum_1^n e_i}{b} \cdot V_o$$

en admettant que toutes les rangées sont équidistantes sur tous les convoyeurs d'alimentation et que la distance entre deux rangées est égale à **b**.

Si l'on admet par ailleurs que toute les rangées ont la même longueur l et que les écarts $e_i$ sont tous égaux à **e**

$$V = \frac{n(\ell + e)}{b} \cdot V_o$$

Si en outre **e = a** (condition de mise en pas)

$$V = \frac{n(\ell + a)}{b} \cdot V_o$$

Le procédé ci-dessus et le dispositif permettant sa mise en oeuvre assurent d'une manière simple et économique l'alignement et la mise en pas des produits amenés par rangées par un ou plusieurs convoyeurs d'alimentation.

Le dispositif selon la présente invention supprime de façon complète le temps d'attente nécessaire dans les systèmes actuels pour ramener le chariot mobile dans sa position initiale et permet par conséquent d'effectuer l'opération de transfert dans un temps minimal permettant d'accroître les cadences de cette opération par rapport à celles que l'on pouvait atteindre avec des systèmes connus. En régulant de façon appropriée les vitesses relatives des deux convoyeurss 10 et 11, on peut, selon le but recherché, augmenter le remplissage du convoyeur d'évacuation ou effectuer un alignement et/ou une mise en pas des produits transférés.

**Revendications**

1. Procédé pour aligner et/ou mettre au pas de manière continue des produits amenés en rangées successives par au moins un convoyeur d'alimentation, et déposé sur un convoyeur d'évacuation, ce dernier étant équipé de moyens indépendants pour régler sa vitesse axiale pour rapport à celle du convoyeur d'alimentation, caractérisé en ce que l'on dispose lesdits convoyeurs d'alimentation et d'évacuation de telle manière que leurs axes forment un angle aigu entre eux, en ce que l'on règle la vitesse **V** du convoyeur d'évacuation en fonction de la vitesse $V_0$ du convoyeur d'alimentation, de telle manière que le dépôt des produits d'une rangée sur le convoyeur d'évacuation s'effectue lorsque les derniers produits de la rangée précédente arrivent approximativement à la hauteur des premiers produits de la rangée suivante, et en ce que l'on aligne les produits sur ledit convoyeur d'évacuation en faisant pivoter les rangées successives de produits d'un angle complémentaire à l'angle des axes des deux convoyeurs.

2. Procédé selon la revendication 1, dans lequel on amène les produits par rangées successives sur n convoyeurs d'alimentation, disposés parallèlement entre eux et se déplaçant à la même vitesse $V_0$ et dans lequel on dépose successivement les rangées de produits des n convoyeurs d'alimentation sur le convoyeur d'évacuation, caractérisé en ce que la vitesse **V** du convoyeur d'évacuation est liée à la vitesse $V_0$ des n convoyeurs d'alimentation par la relation :

$$V = \frac{\sum_{1}^{n} \ell_i + \sum_{1}^{n} e_i}{b} \cdot V_o$$

où

$V_0$ représente la vitesse de déplacement axial des convoyeurs d'alimentation,

**b** représente la distance séparant une rangée de produits de la suivante sur les convoyeurs d'alimentation,

$\ell_i$ représente la longueur des rangées d'un même convoyeur d'alimentation **i**

$e_i$ représente l'écart entre une rangée de produits et la suivante sur le convoyeur d'évacuation après alignement des produits.

3. Procédé selon la revendication 2, dans lequel toutes les rangées de produits ont la même longueur $\ell$, caractérisé en ce que l'on effectue la mise en pas des produits sur le convoyeur d'évacuation, en ce que l'on règle la vitesse **V** de ce convoyeur par rapport à la vitesse $V_0$ du convoyeur d'amenée de telle manière que ces vitesses soient liées par la relation suivante :

$$V = \frac{n \; (l + a)}{b} \cdot V_o$$

dans lequel **a** représente la distance des produits entre eux dans une même rangée.

4. Dispositif pour aligner et/ou mettre en pas de manière continue des produits amenés en rangées successives par au moins un convoyeur d'alimentation, et déposés sur un convoyeur d'évacuation, ce dernier étant équipé de moyens indépendants pour régler sa vitesse axiale par rapport à celle des convoyeurs d'alimentation, dans lequel le convoyeur d'alimentation forme avec le convoyeur d'évacuation un angle aigu ($\alpha$), ce dispositif étant conçu pour mettre en oeuvre le procédé selon l'une quelconque des revendications 1 à 3, caractérisé en ce qu'il comprend des moyens pour régler la vitesse **V** du convoyeur d'évacuation en fonction de la vitesse $V_0$ du convoyeur d'alimentation, de telle manière que le dépôt des produits d'une rangée sur le convoyeur d'évacuation s'effectue lorsque les derniers produits de la rangée précédente arrivent approximativement à la hauteur des premiers produits de la rangée suivante et des moyens pour aligner les produits sur ledit convoyeur d'évacuation en faisant pivoter les rangées successives de produits d'un angle complémentaire à l'angle des axes des deux convoyeurs.

5. Dispositif selon la revendication 4, caractérisé en ce que l'angle ($\alpha$) des deux convoyeurs est défini par la relation :

$L \geq \ell \cos \alpha + c \sin \alpha$

où **L** représente la largeur du convoyeur d'évacuation,

$\ell$ représente la longueur d'une rangée de produits sur le convoyeur d'alimentation,

**c** représente la longueur d'un produit.

6. Dispositif selon la revendication 4, caractérisé en ce qu'il comporte n convoyeurs d'alimentation disposés parallèlement entre eux et un convoyeur d'évacuation faisant avec les convoyeurs d'alimentation un angle $\alpha$.

FIG. 1

FIG. 2

FIG. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 130 810  (THE POST OFFICE) <br> * Page 2, lignes 1-5,13-30; page 6, lignes 4-8; figure 1 * <br> --- | 1,2,4,6 | B 65 G   47/68 |
| A | US-A-2 371 877  (CROSLAND) <br> * Page 1, colonne de gauche, lignes 5-12,29-42; colonne de droite, lignes 15-24; page 2, colonne de gauche, lignes 21-28; figure 1 * <br> --- | 1-6 | |
| A | FR-A-2 182 148  (RAPISTAN INC.) <br> * Page 3, lignes 32-37, page 5, lignes 23-33; page 8, lignes 31-37; page 9, lignes 25-33; figures 1,2A * <br> --- | 1,2,4,6 | |
| A | FR-A-2 483 745  (FONTAINE) <br> * Page 2, lignes 5-28; figures * <br> ----- | 1-4 | |

**DOMAINES TECHNIQUES RECHERCHES (Int. Cl.4)**

B 65 G
B 65 B
A 21 C
A 23 G

Le présent rapport a été établi pour toutes les revendications

| Lieu de la recherche | Date d'achèvement de la recherche | Examinateur |
|---|---|---|
| LA HAYE | 22-07-1988 | VAN DER ZEE W.T. |

EPO FORM 1503 03.82 (P0402)